# EUROPÄISCHE PATENTSCHRIFT

(11) **EP 0 736 244 B1**
(45) Veröffentlichungstag und Bekanntmachung des Hinweises auf die Patenterteilung: **03.05.2000**
(21) Anmeldenummer: 96109822.5
(22) Anmeldetag: 16.09.1992
(51) Int. Cl.: A01D 75/28

(54) **Erntemaschine mit Seitenhangausgleich**
Harvesting machine with compensation means for hillside working
Machine de récolte munie de moyens de compensation pour le travail sur une pente

(30) Priorität: 21.09.1991 DE 4131433; 23.03.1992 DE 4209340; 06.04.1992 DE 9204713 U
(43) Veröffentlichungstag der Anmeldung: 09.10.1996
(62) Teilanmeldung aus: 95114704.0
(73) Patentinhaber: DEERE & COMPANY, Moline, Illinois 61265-8098 (US)
(72) Erfinder: Kempf, Bernd, 66484 Althornbach (DE); Scheid, Heinrich, 66440 Blieskastel (DE); Roth, Wolfgang, 66482 Zweibrücken (DE); Pauli, Klaus, 66424 Homburg (DE); von Meltzing, Wolfgang, 66440 Blieskastel/Bierbach (DE)
(74) Vertreter: Feldmann, Bernhard

(56) Entgegenhaltungen:
- DE-B- 1 066 878
- FR-A- 1 136 449
- GB-A- 336 029
- SU-A- 1 017 575
- US-A- 2 753 675
- US-A- 2 904 341
- US-A- 3 731 470
- LANDTECHNIK, Bd. 34, Nr. 6, 1.Juni 1979, Seiten 282-286, XP000577031 TEBRUEGGE F: "HANGMAEHDRESCHER AUS TECHNISCHER UND OEKONOMISCHER SICHT"

## Beschreibung

Die Erfindung betrifft eine Erntemaschine mit Seitenhangausgleich.

Maschinen, insbesondere Fahrzeuge, werden grundsätzlich für den Betrieb auf ebenem Boden ausgebildet; demzufolge kann der Einsatz im Gelände, in dem die Aufstandsfläche mehr oder weniger geneigt verläuft, zu nicht unwesentlichen Beeinträchtigungen der Funktion der Maschine führen. Im Falle eines für den Einsatz in der Ebene bestimmten Mähdreschers ist herkömmlich eine Tragvorrichtung vorgesehen, die einen als Achsrohr ausgebildeten Rahmen enthält, an dessen Enden ein Flansch angebracht ist, der der Verbindung mit einem Gegenflansch an einem Endantriebsgehäuse dient. Wird dieser Aufbau belassen, muß bei der Arbeit am Hang entweder mit Kornverlusten gerechnet werden, oder in dem Mähdrescher vorhandene Funktionsgruppen müssen so ausgebildet werden, daß sie eine Hangneigung ausgleichen können.

Andererseits sind bereits Tragvorrichtungen vorgeschlagen worden, mit denen eine am Hang bzw. auf sonstigen geneigten Flächen arbeitende Maschine in eine horizontale Stellung gebracht werden kann.

So zeigt die US-A-37 31 470 einen Mähdrescher mit Endantrieben, die jeweils an einen Schwenkarm angeschlossen und vertikal schwenkbar in einer an einem Rahmen befestigten Konsole gelagert sind. Die Schwenkarme werden mittels eines Hydraulikzylinders um eine horizontale Achse geschwenkt, zu der ein hülsenförmig ausgebildeter Schenkel des Schwenkarms konzentrisch verläuft. Der Endantrieb wird mit dem Schwenkarm vertikal verschwenkt und verstellt somit die Höhe bzw. Neigung des Mähdreschers aufgrund von Signalen, die von einem Neigungssensor ermittelt wurden. In dem Schwenkarm ist zudem ein Kettengetriebe vorgesehen, das den Antrieb von einem Getriebe zu dem Endantrieb überbrückt.

Diese Schwenkvorrichtung ist nachteilig, weil der Schwenkarm ein Getriebe enthalten muß, das den Antrieb zwischen der Antriebsquelle und dem Endantrieb überträgt und die Baubreite des Mähdreschers erheblich vergrößert.

Es ist weiterhin bekannt (US-A-3,703,298 und Prospekt: Laverda mietitrebbia autolivellante M 100 AL, Ditta Pietro Laverda, 1^{a} edizione 1971 - FOZ), den gesamten Achskörper eines Mähdreschers in einer quer zur Fahrtrichtung verlaufenden Ebene zu verschwenken und den Antrieb mittels Kardanwellen zu übertragen.

Der Aufwand zum Ausrüsten eines Fahrzeugs mit einer derartigen Schwenkvorrichtung ist sehr hoch.

Die DE-A-1 066 878 und die DE-A-808 183 zeigen jeweils eine Aufhängung eines Rades einer Antriebsachse eines Ackerschleppers, wobei das Rad in einer vertikalen Ebene schwenkbar und darüber hinaus in einer bestimmten Stellung festlegbar ist. Auf diese Weise kann der Ackerschlepper auf der Straße mit einer tiefen Lage des Schwerpunkts und auf dem Feld mit einer hohen Schwerpunktlage gefahren werden, was Beschädigungen von Feldfrüchten durch den Ackerschlepper vermeiden hilft.

Es ist weiterhin bekannt, bei Ackerschleppern sowie anderen Fahrzeugen, insbesondere Nutzfahrzeugen, Räder nicht höhenbeweglich, sondern direkt oder über einen Halter, der meist als Endantrieb ausgebildet ist, anzuschließen.

Bei derartigen Maschinen kann es sich um jegliche Art von Fahrzeugen, also Landmaschinen, Baufahrzeuge, Forstfahrzeuge, Geländefahrzeuge und dergleichen handeln.

Die der Erfindung zugrunde liegende Aufgabe wird darin gesehen, eine Lösung vorzuschlagen, die es ermöglicht, mit relativ wenigen und einfachen Mitteln eine Erntemaschine hangtauglich zu machen, und dabei die Breite so gering wie möglich zu halten.

Diese Aufgabe wird erfindungsgemäß durch die Lehre des Patentanspruchs 1, gelöst, wobei in den weiteren Patentansprüchen Merkmale aufgeführt sind, die die Lösung in vorteilhafter Weise weiterentwickeln.

Auf diese Weise erstreckt sich die Stellvorrichtung nicht senkrecht, wie dies beim Stand der Technik bekannt ist, sondern im wesentlichen waagrecht und zwar in einer Weise, die eine Anordnung unterhalb des Rahmens oder Fahrgestells zuläßt. Beim Stand der Technik erstrecken sich die Stellvorrichtungen seitlich des Rahmens und nehmen eine beträchtliche Höhe ein, so daß sich die Baubreite erhöht und die für den Straßentransport zulässigen Abmessungen überschreitet.

Das Vorsehen zweier einen Abstand zueinander aufweisender Wellen als Eingangswelle und als Ausgangswelle in dem Getriebe, die zueinander parallel verlaufen, ermöglicht die Nutzung des durch den Hebelarm entstandenen Raums für eine Untersetzungsstufe.

Die Konsole kann noch breiter ausgebildet werden, ohne daß sich dadurch die Baubreite der Landmaschine überhaupt oder merklich erhöht, wenn sie wenigstens teilweise in vertikaler Deckung zu einer Seitenwand des Fahrgestells angebracht wird.

Wenn der zweite Schenkel an das Getriebe, d. h. dessen Getriebegehäuse anflanschbar ist, was vorzugsweise mit Schrauben erfolgt, kann ein vorhandenes Getriebe verwendet werden, das keiner speziellen Anpassung bedarf. Jedenfalls ist das Getriebe und dessen Gehäuse zur Übertragung einer Antriebsbewegung ausgelegt, während der zweite Schenkel keine Antriebselemente benötigt und lediglich die gestellten Festigkeitserfordernisse erfüllen muß.

Eine plattenförmige Ausbildung des zweiten Schenkels führt zu einer weiteren Reduzierung der Baubreite. Eine solche Platte kann auch aus hochfestem Walz- oder Schmiedestahl gebildet werden.

Die Verwendung einer Gleitlagerbüchse zwischen dem ersten Schenkel und dem Lager in der Konsole verringert die Flächenreibung und somit die Reibkräfte, was sich in geringem Wartungsaufwand niederschlägt. Dadurch soll aber keinesfalls die Verwendung von Rollen- oder Kugellagern ausgeschlossen werden.

Eine Schweißverbindung zwischen der Konsole und dem Rahmen oder dem Fahrgestell stellt eine noch festere Verbindung zwischen diesen her, als z. B. eine Niet- oder Schraubverbindung, was bei den am Hang auftretenden Biege- und Torsionskräften zu mehr Sicherheit führt.

Eine auf die dem zweiten Schenkel abgelegene Seite des ersten Schenkels aufgebrachte Platte hat den Vorteil, daß sie mithilft, den ersten Schenkel gegen eine Axialbewegung in dem Lager zu sichern und daß sie einen Angriffspunkt für ein Geberglied einer abhängigen Steuerung und/oder der Stellvorrichtung bildet.

Das Vorhandensein eines Anschlags an dem Schwenkarm, insbesondere an dessen zweiten Schenkel, stellt ein Sicherheitsmerkmal dar, weil dadurch beim Ausfall der Stellvorrichtung vermieden werden kann, daß der Radträger in eine Stellung gelangt, in der das Fahrzeug Schaden nimmt. Dieser Anschlag kann an der Konsole oder an dem Tragteil zur Anlage kommen.

Eine Teileoptimierung tritt ein, wenn der Anschlag, der als Zapfen ausgebildet sein kann, zugleich einen Angriffspunkt für die Stellvorrichtung bildet.

Die Ausbildung des ersten Schenkels als eine Büchse, die einen Durchtritt für eine zu der Eingangswelle führende Welle bildet, wahrt weiterhin die Trennung zwischen den Komponenten zur Übertragung der Antriebsbewegung von denen für die Schwenkbewegung.

Die Verwendung gleicher oder kompatibler Anschlußmittel für eine Erntemaschine mit oder ohne Hangausgleich spart Teile und eröffnet die Möglichkeit, eine Basismaschine nachträglich in eine Erntemaschine mit oder ohne Hangausgleich umzurüsten.

Wenn die Achse der Ausgangswelle einer Antriebsquelle, die einer Eingangswelle des Getriebes und die eines Lagers zur Aufnahme des Schwenkarms koaxial zueinander verlaufen, kann die Schwenkbewegung um die beiden Wellen erfolgen, ohne daß es zu einer Änderung der relativen Lage zwischen diesen kommt; die Ausrichtung der Eingangswelle zu der Abtriebswelle bleibt erhalten; diese verlaufen konzentrisch zu der Schwenkachse des Getriebes.

Die getrennte Ausbildung und anschließende formschlüssige und vorzugsweise lösbare Verbindung beider Schenkel des Schwenkarms ist fertigungstechnisch günstig, weil der eine Schenkel eine hohe Festigkeit und der andere Schenkel eine gute Gleiteigenschaft in dem Lager aufweisen muß, was mit einem aus gleichem Material hergestellten einteiligen Schwenkarm mitunter schwer zu erreichen ist. Der Schwenkarm kann festigkeitsmäßig optimal ausgebildet werden, wenn seine Schenkel für die jeweilige Beanspruchung aus geeignetem Material gebildet und anschließend vorzugsweise mittels Schweißen oder anderer, lösbarer Verbindungsarten zusammengefügt werden. Auf diese Weise ist es z. B. möglich, den mit dem Radträger verschraubten einen Schenkel aus einem hochfesten Schmiedeteil zu bilden, während ein senkrecht dazu verlaufender und in ein drehbares Lager eingesetzter Schenkel mit einer hohen Oberflächengüte versehen wird.

Wird an den Schwenkarm ein Geberglied angeschlossen, das dessen Stellung ermittelt und daraus ein Ausgangssignal bildet, kann mit diesem ein Nehmerglied gesteuert werden, das bei einem Mähdrescher z. B. dessen Erntebergungsvorrichtung in einer Lage parallel zu dem Boden führt. Das Geberglied kann sowohl hydraulisch, wie auch mechanisch oder elektrisch wirkend ausgebildet sein. Die hydraulische Ausbildung ist dort von sehr großem Nutzen, wo hohe Stellkräfte übertragen werden müssen.

Eine optimale und alle Betriebszustände erfassende Regelung der Landmaschine ist möglich, wenn auf die Regeleinrichtung der Stellvorrichtungen selbst oder auf eine an diese angeschlossene Steuerung der Querneigung eines an das vordere Ende der Landmaschine angebauten Vorsatzes zusätzlich ein Vorsatz-Querausgleichssystem wirkt, das zum Ziel hat, den Vorsatz zusätzlich und unabhängig von einer Hangneigung stets parallel zu dem Boden zu führen.

Die Verwendung eines doppeltwirkenden linearen Hydraulikmotors als Geberglied für eine nachrangige Steuerung oder Regelung der Querneigung eines Erntevorsatzes sorgt für eine sichere Übertragung der Stellbewegung in beiden Richtungen.

Die Verwendung wenigstens eines Distanzrings zwischen dem ersten Schenkel und dem Lager, der wahlweise zwischen der einen oder der anderen Stirnseite des als Hülse ausgebildeten Lagers und dem ersten Schenkel eingefügt werden kann, ermöglicht es, den ersten Schenkel dauerhaft in dem Lager in unterschiedlichen axialen Stellungen zu halten und somit die Spurbreite des Fahrzeug bzw. der Landmaschine zu variieren.

Je nachdem, ob es auf die Einhaltung einer bestimmten Fahrzeugbreite im Bereich der Räder ankommt oder nicht, kann das Fahrgestell bzw. der Tragteil an der inneren oder der äußeren Wand einer doppelwandigen Konsole der Schwenkvorrichtung angeschlossen werden.

Ist ein Anschluß an der äußeren Wand vorgesehen, kann durch Ausschnitte in den oberen Bereichen der Wände der Tragteil in die Schwenkvorrichtung mit einbezogen werden, so daß sich auch die Bauhöhe nicht verändert.

Der Antrieb des Radträgers kann anstatt über eine Welle von einem mechanischen Getriebe aus auch direkt mittels eines Druckmittelmotors erfolgen, der umso geschützter ist, wenn er innerhalb des ersten Schenkels untergebracht wird. Die Ausbildung als zwei- oder mehrstufiger Druckmittelmotor führt zu einem großen Geschwindigkeitsbereich.

Wird ein die Stellvorrichtung abstützender Bolzen als Sensorglied, z. B. als Last- oder Druckbolzen ausgebildet, kann über die empfangenen Signale, z. B. ein Überlastzustand oder eine Gewichtszunahme z. B. aufgrund der Korntankbefüllung ermittelt werden.

Eine minimierte Beanspruchung der Stellvorrichtung in einem Außerbetriebszustand wird erreicht, wenn die Kolben ganz in die Zylinder eingefahren und somit drucklos sind und zwischen einem Ruhe- und einem Voll-Betriebszustand unterschieden wird, wobei nur in dem Vollbetriebszustand eine Regelung des Schwenkmaßes des Radträgers erfolgt.

Die beiden aus Kolben und Zylinder bestehenden Stellvorrichtungen können auf vorteilhafte Weise auch so auf manuelle Weise gesteuert werden, daß sie ganz ausfahren und somit die Landmaschine über ein für den Betrieb normalerweise geeignetes Maß anheben. Das Anheben kann Vorteile bei der Verladung, bei der Wartung, beim An- und Abkuppeln eines Vorsatzes und ähnlicher Vorgänge entwickeln. Außerdem kann auf diese Weise die Erntemaschine auch in Längsrichtung gegenüber dem Hang verstellt werden.

Die Anordnung der Konsole(n) unterhalb der Seitenwände des Fahrgestells oder Rahmens der Erntemaschine bzw. zwischen diesen Seitenwänden hat den großen Vorteil, daß sich die Breite der Konsolen nicht zu der Maschinenbreite hinzuaddiert, wodurch erneut eine geringe Baubreite erreicht wird.

In der Zeichnung sind mehrere nachfolgend näher beschriebene Ausführungsbeispiele der Erfindung dargestellt. Es zeigt:
- Fig. 1: eine Erntemaschine in Seitenansicht,
- Fig. 2: einen Rahmen mit einer Schwenkvorrichtung in Draufsicht,
- Fig. 3: einen Rahmen anderer Bauart mit einer Schwenkvorrichtung in Draufsicht,
- Fig. 4: einen Rahmen mit einer geänderten Schwenkvorrichtung in Draufsicht,
- Fig. 5: einen Rahmen mit einer in anderer Weise angebrachten Schwenkvorrichtung in Draufsicht,
- Fig. 6: die Schwenkvorrichtung nach den Figuren 2 bis 5 in Seitenansicht,
- Fig. 7: einen Rahmen ohne Schwenkvorrichtung in Draufsicht,
- Fig. 8: einen Rahmen ohne Schwenkvorrichtung, aber mit einem Zwischenstück in Draufsicht,
- Fig. 9: einen Rahmen ohne Schwenkvorrichtung in Draufsicht und
- Fig. 10: einen Rahmen ohne Schwenkvorrichtung, aber mit einem Zwischenstück in Draufsicht,

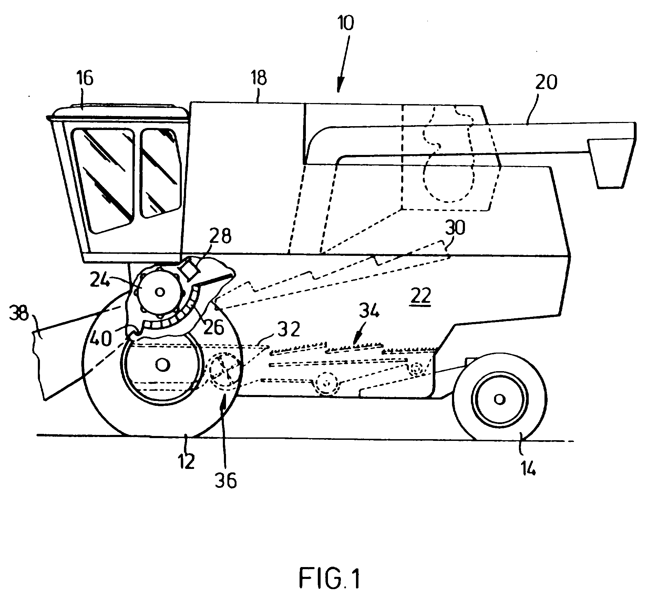

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso jede andere Art von Land- Bau- und Forstmaschine oder sonstigem Fahrzeug, insbesondere ein Traubenvollernter, ein Hochrad-Ackerschlepper, eine Mähmaschine, ein Geländefahrzeug, ein Freizeitfahrzeug, ein Feldhäcksler, ein Baumwollpflücker, ein Ackerschlepper, ein Bagger, ein Baumfäller und ein Lastwagen oder dergleichen für die Anwendung der Erfindung dienen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Fahrgestell 22, das ein Chassis, ein Fahrzeugtragrahmen, ein Unterbau oder dergleichen sein kann und an das die vorderen Räder 12 in diesem Ausführungsbeispiel über einen in vielfältiger Weise ausbildbaren Rahmen 46 und jeweils ein Getriebe 50 dreh- und antreibbar angeschlossen sind; die Räder 12 können aber auch direkt an das Fahrgestell 22 angeschlossen sein. In dem Fahrgestell 22 wird zugeführtes Gut auf dem Weg über eine Dreschtrommel 24, einen Dreschkorb 26 und eine Wendetrommel 28 in seine großen und kleinen Bestandteile zerlegt. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einem nicht gezeigten und als Erntegutbergungsvorrichtung ausgebildeten Vorsatz vom Boden aufgenommen worden ist.

Die Qualität und die Quantität der Trennung des Ernteguts auf den Schüttlern 30, dem Vorbereitungsboden 32 und den Sieben 34 sind am besten, wenn sich die Erntemaschine 10 auf einer waagrechten Aufstandsfläche befindet.

Für den Einsatz in Hanglagen ist daher eine erfindungsgemäße Schwenkvorrichtung 44 vorgesehen, die die Erntemaschine 10 innerhalb bestimmter Grenzen in einer waagrechten Lage hält.

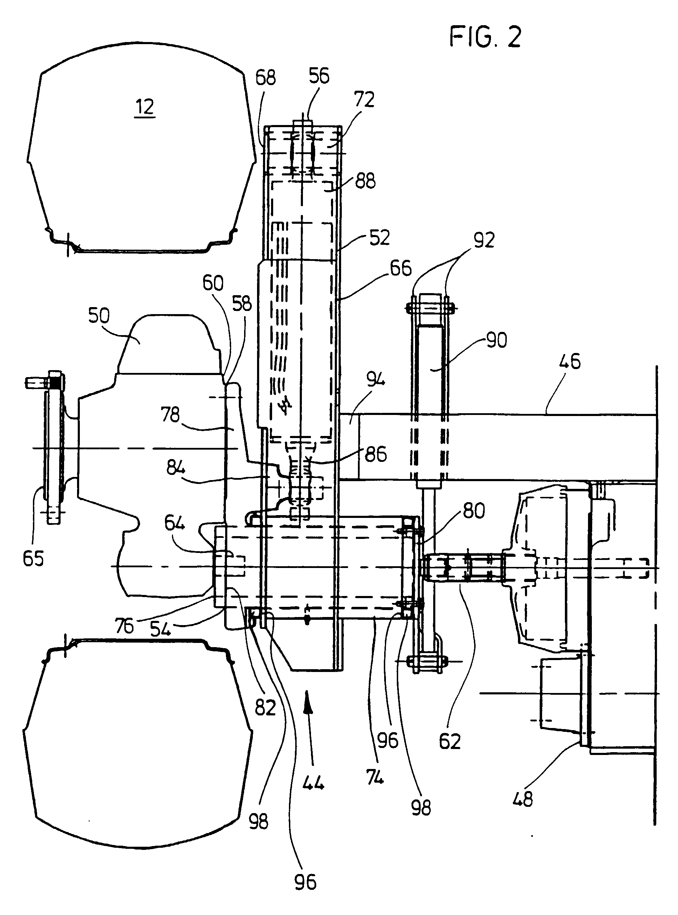

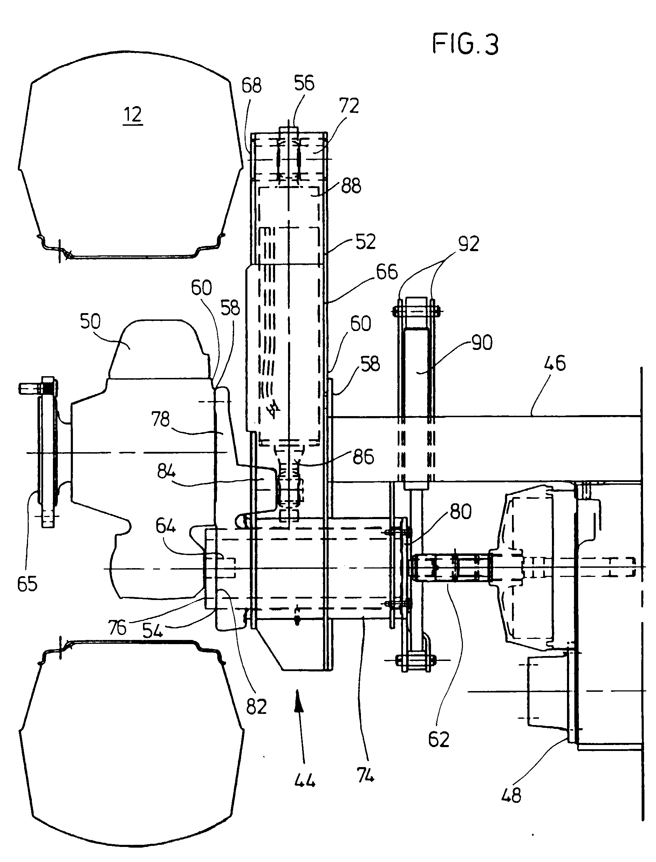

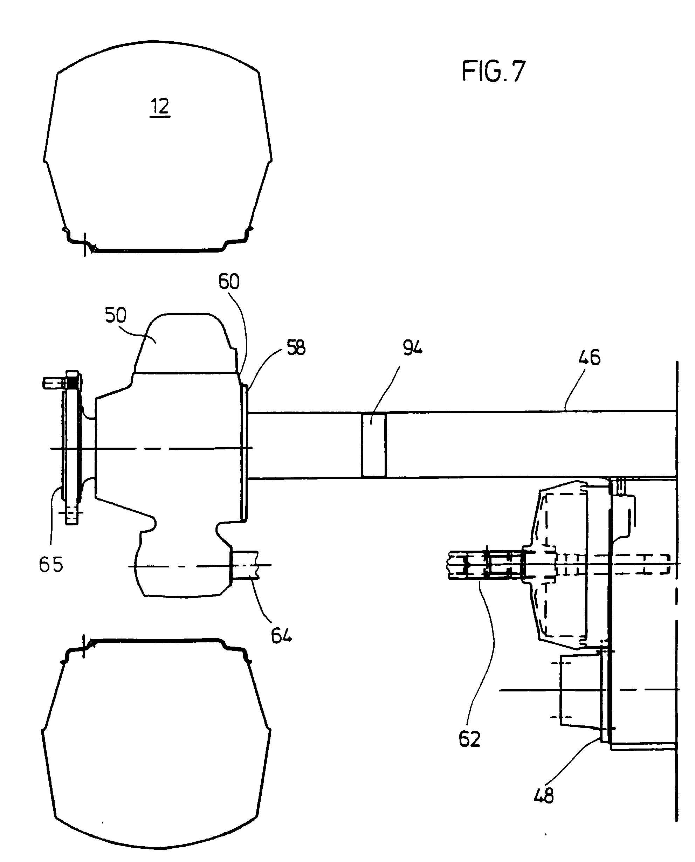

Für den Einsatz in ebenem Gelände ist der Rahmen 46 gemäß den Figuren 7 bis 10 starr mit einem von dem Getriebe 50 bzw. Getriebegehäuse gebildeten Radträger verbunden. Für den dauerhaften oder teilweisen Einsatz der Erntemaschine 10 in Hanglagen sind die Getriebe 50 gemäß den Figuren 2 bis 6 über die Schwenkvorrichtung 44 vertikal schwenkbar an den Rahmen 46 angeschlossen, so daß die Erntemaschine 10 innerhalb bestimmter Grenzen in einer waagrechten Lage gehalten werden kann.

In den Figuren 2 bis 10 sind verschiedene Lösungen eines Rahmens 46 gezeigt, wie sie geeignet sind, aus Erntemaschinen 10 mit gleichem Fahrgestell 22 solche für den Einsatz auf ebenem Gelände und solche für den Einsatz in Hanglagen zu machen. Zu ihrer Verbindung mit dem Fahrgestell 22 ist der Rahmen 46 mit nicht detailliert gezeigten Anschlußmitteln versehen, die als Schraub-, Niet- oder Schweißflansche ausgebildet sein können.

Die Rahmen 46 in den Figuren 2 bis 6 sind für den Einsatz in Hanglagen gerüstet und deshalb mit der Schwenkvorrichtung 44 versehen.

Die Schwenkvorrichtung 44 stellt eine Verbindung zwischen dem Rahmen 46 und einer Antriebsquelle 48 einerseits und dem Getriebe 50 andererseits her und enthält eine Konsole 52, einen Schwenkarm 54 und eine Stellvorrichtung 56. Bei Erntemaschinen 10 ohne die Schwenkvorrichtung 44 ist das Getriebe 50 direkt, unbeweglich und vorzugsweise lösbar an den Rahmen 46 angeflanscht; dies wird in den Figuren 7 bis 10 dargestellt.

Das Rad 12 kann durch die Antriebsquelle 48, die in der Zeichnung nur schematisch dargestellt ist, in Drehung versetzt werden und kann sowohl als Vorder- wie auch als Hinterrad eingesetzt werden. Das Rad 12 ist über eine in eine Radnabe übergehende Ausgangswelle 65 in dem Getriebe 50 drehbar gelagert.

Die Schwenkvorrichtung 44 ist derart ausgebildet, daß sie zwischen das Getriebe 50 und den Rahmen 46 eingefügt werden kann und somit die für die Ebene vorgesehene Erntemaschine 10 hangtauglich macht. Es wird darauf hingewiesen, daß es grundsätzlich ausreicht, wenn nur eine Schwenkvorrichtung 44 für eines der vorderen Räder 12 vorgesehen ist. Die Größe des möglichen Hangausgleichs erhöht sich jedoch, wenn für jedes vordere Rad 12 eine Schwenkvorrichtung 44 besteht. Die Figuren 2 bis 10 zeigen nur die in Fahrtrichtung gesehen linke Hälfte des Rahmens 46 und der an ihn angeschlossenen Teile, einschließlich der Schwenkvorrichtung 44 für das linke Rad 12.

Der Rahmen 46 ist in diesem Ausführungsbeispiel vorhanden und als eine einzige Achse ausgebildet; dies ist jedoch nicht zwingend. Vielmehr kann - sofern ein Rahmen 46 überhaupt erforderlich und das Getriebe 50 nicht direkt an das Fahrgestell 22 angeschlossen ist - als Rahmen 46 auch eine oder mehrere Konsolen oder dergleichen vorgesehen sein, die an die betreffenden Stellen des Fahrgestells 22 angeschlossen, insbesondere angeflanscht werden. Der Rahmen 46 dieses Ausführungsbeispiels ist als ein Achsrohr von rechteckigem Querschnitt ausgebildet und mit dem Fahrgestell 22 über fahrgestellseitige Anschlußmittel 94 verbunden. Er erstreckt sich im unteren Bereich der Erntemaschine 10 quer zu dessen Fahrtrichtung und ist dazu bestimmt, die vorderen Räder 12 mittelbar drehbar aufzunehmen. Die fahrgestellseitigen Anschlußmittel 94 sind schematisch als Flansch dargestellt, der entsprechend den an dem Fahrgestell 22 vorgesehenen zuvor erwähnten Flanschen ebenfalls als Schraub-, Niet- oder Schweißflansch ausgebildet ist. Der Rahmen 46 ist vorzugsweise an seinen Endflächen starr oder alternativ über sich vertikal erstreckende Anschlußmittel 58, insbesondere einen Flansch mit der Konsole 52 verbunden. Erforderlichenfalls ist an der Konsole 52 ein korrespondierendes Anschlußmittel 60, nämlich ein Gegenflansch angebracht. Die Verbindung kann vorzugsweise mittels Schweißen hergestellt werden.

Bei der Antriebsquelle 48 handelt es sich um ein herkömmliches Mehrganggetriebe, aus dem eine Abtriebswelle 62 ragt und die den Antrieb für die vorderen Räder 12 überträgt. Diese Antriebsquelle 48 kann allerdings auch durch Druckmittelmotoren ersetzt werden.

Das in dem Getriebegehäuse enthaltene, nicht gezeigte mehr oder weniger aufwendige Getriebe 50 wird üblicherweise als Endantrieb bezeichnet und enthält vorteilhafterweise eine Stirnradstufe, die eine Drehzahluntersetzung zwischen der Antriebsquelle 48 und dem vorderen Rad 12 bewirkt. Hierzu sind eine Eingangswelle 64 und eine Ausgangswelle 65 vorgesehen, die über die Stirnradstufe miteinander kämmen. Andererseits wäre auch die Verwendung eines Kettengetriebes, eines Schaltgetriebes oder eines Planetengetriebes möglich. Jedenfalls verläuft die Eingangswelle 64 parallelachsig zu der Ausgangswelle 65, so daß sich die Lage der Ausgangswelle 65 in der Höhe verändert, wenn man das Getriebe 50 um die Drehachse der Eingangswelle 64 schwenkt. Die Eingangswelle 64 und die Abtriebswelle 62 verlaufen vorzugsweise koaxial. Je nach dem in dem Getriebegehäuse enthaltenen Getriebe 50 und dessen festigkeitsmäßiger Ausbildung kann dieses unterschiedlich ausgebildet sein und gegebenenfalls unterschiedliche Lochbilder für nicht gezeigte Gewindebohrungen aufweisen. Die Gewindebohrungen können sowohl in einem zusammenhängenden Flansch wie auch in eigenständigen Zapfen, die vorzugsweise mit Gewindebohrungen für Dehnschrauben versehen sind, enthalten sein. Ein derartiger Flansch, derartige Zapfen oder dergleichen werden allgemein als Anschlußmittel 60 bezeichnet, die bei den in Betracht kommenden Getrieben 50 gleich sind und über die das Getriebe 50 an den betreffenden Rahmen 46 angeschlossen werden kann.

Alternativ hierzu könnte das Getriebe 50 in seiner einfachsten Form als ein Lager oder eine Nabe ausgebildet sein, in der das Rad 12 drehbar und mit einer Antriebsquelle 48 verbunden aufgenommen ist.

Bei dem Rahmen 46, der Antriebsquelle 48 und dem Getriebe 50 handelt es sich um Komponenten, die ohne jegliche Änderung sowohl an der Erntemaschine 10 für die Ebene als auch an dem für den Hang verwendet werden können. Allerdings kann in dem Fall, daß eine Erntemaschine 10 ausschließlich für die Arbeit am Hang eingesetzt werden soll, der Flansch 58 an dem Rahmen 46 entfallen und die Konsole 52 direkt an den Rahmen 46 angeschweißt oder angeschraubt werden.

Die Konsole 52 wird in diesem speziellen Ausführungsbeispiel aus dickwandigem Stahlblech in der Art eines an seiner Unterseite teilweise offenen Gehäuses gebildet und erstreckt sich im wesentlichen parallel zu der Stirnseite des Rahmens 46 und vorzugsweise wenigstens in teilweiser vertikaler Deckung mit einer Seitenwand des Fahrgestells 22. Erwähnt seien eine innere, in der Zeichnung rechts gelegene Wand 66, eine äußere Wand 68, eine Decke 70 und ein Boden 71.

Stirnseitig ist die Konsole 52 offen, und am Boden 71 ist sie teilweise geschlossen.

Die innere Wand 66 ist über eine plane Fläche oder einen Flansch starr an den Rahmen 46 angeschweißt oder angeschraubt. Das Anschlußmittel 58 und das korrespondierende Anschlußmittel 60 können in der einfachsten Form als zusammenpassende bearbeitete Flächen ausgebildet sein, an denen der Rahmen 46 und die Konsole 52 miteinander verbunden, z. B. verschweißt werden. In einer weiterentwickelten Ausführungsform können die Anschlußmittel 58, 60 als Flansche ausgebildet sein, die mittels Schrauben oder Nieten miteinander verbunden werden.

In der einfachsten Form wird also die Konsole 52 an den Rahmen 46 angeschweißt, während sie bei der Benutzung von Loch-Flanschen auch angeschraubt oder angenietet werden kann. Die Verbindung mittels Flanschen kommt nicht nur aus Gründen einer möglichen Umrüstung des Rahmens 46 für den Einsatz in der Ebene bzw. am Hang in Betracht, sondern kann auch aus Fertigungsgründen so gewählt werden.

Die Decke 70 und der Boden 71 verbinden beide Wände 66, 68 starr und drehsteif miteinander, z. B. mittels einer Schweißverbindung.

Die äußere Wand 68 erstreckt sich parallel zu der inneren Wand 66 und weist die gleiche oder im wesentlichen die gleiche Form auf wie diese. Zwischen beiden Wänden 66, 68 befindet sich ein Freiraum, in dem sich die Stellvorrichtung 56 bewegen kann. Durch den Freiraum und senkrecht zu der Haupterstreckungsebene der Wände 66, 68 erstreckt sich in einem vorderen Bereich ein Bolzen 72, der in entsprechende Bohrungen in den Wänden 66, 68 aufgenommen und gesichert ist. Durch den gegenüberliegenden Endbereich erstreckt sich analog ein als eine Hülse ausgebildetes Lager 74 von wesentlich größerem Durchmesser, das jedoch beiderseits über die Wände 66, 68 übersteht und mit diesen verschweißt ist, um eine stabile Gehäuseausführung zu erbringen. Das Lager 74 erstreckt sich konzentrisch zu der Drehachse der Abtriebswelle 62 und weist zwei Stirnflächen 96 auf. Das Lager 74 befindet sich bei diesem Ausführungsbeispiel rückwärtig des Rahmens 46 und weist zu diesem einen geringen Abstand auf.

Nach alledem besteht die Konsole 52 aus einem einzigen Schweißzusammenbau, der anstelle des Getriebes 50 an den Rahmen 46 angeschlossen werden kann.

Der Schwenkarm 54 besteht aus einem ersten Schenkel 76 und einem zweiten Schenkel 78, die in diesem Ausführungsbeispiel rechtwinklig zueinander verlaufen und drehfest miteinander verbunden, nämlich verschweißt, sind. In einer weiterentwickelten Ausführungsform können die beiden Schenkel 76, 78 auch über eine Schraub- oder Vielzahn-Verbindung miteinander verbunden sein, die leicht lösbar und leicht herstellbar ist. Auf diese Weise kann jeder Schenkel 76, 78 der jeweiligen Beanspruchung entsprechend aus geeignetem Material und mittels eines geeigneten Verfahrens hergestellt werden. Beispielsweise kann der erste Schenkel 76 gedreht und an der Oberfläche hochvergütet werden, um gute Gleiteigenschaften aufzuweisen, und der zweite Schenkel 78 kann als flacher Teil in einem Gesenk geschmiedet werden, wodurch eine hohe Festigkeit erreicht wird.

Der erste Schenkel 76 weist die Form einer Büchse auf, die sich von dem Getriebe 50 zu der Abtriebswelle 62 erstreckt und einen Innenraum aufweist, durch den sich bequem eine nicht gezeigte und nur im Bedarfsfall erforderliche Wellenverlängerung erstrecken kann, die die Abtriebswelle 62 mit der Eingangswelle 64 verbindet. Die äußere Oberfläche des ersten, außen rundzylindrischen, Schenkels 76 sowie die innere Oberfläche des Lagers 74 sind vergütet, um geeignete Gleit- und Festigkeitseigenschaften zur Bildung eines Gleitlagers zu erhalten. Gleichermaßen kann zwischen dem ersten Schenkel 76 und dem Lager 74 auch eine separate Gleitbüchse vorgesehen werden, und schließlich ist es sinnvoll, eine Schmiervorrichtung anzubringen - all dies ist jedoch nicht gezeigt. Anstelle der Gleitlagerung kann auch ein Nadel- oder Rollenlager Verwendung finden. Der erste Schenkel 76 ist gegen eine axiale Verschiebung nach außen, d. h. mit Blick auf die Zeichnung nach links, mittels einer Platte 80 gesichert, die stirnseitig auf ihn aufgeschraubt ist. Wie bereits erwähnt, kann innerhalb des ersten Schenkels 76 anstatt der Verbindung mit der Antriebsquelle 48 über die Abtriebswelle 62 auch ein nicht gezeigter Druckmittelmotor vorgesehen werden, der vorzugsweise zwei Geschwindigkeitsstufen aufweist und direkt auf die Eingangswelle 64 aufgesetzt ist.

Zur axialen Positionierung des ersten Schenkels 76 innerhalb des Lagers 74 sind in diesem Ausführungsbeispiel zwei Distanzringe 98 vorgesehen; es sind jedoch auch mehr oder weniger Distanzringe 98 verwendbar. Gemäß dem Ausführungsbeispiel nach Figur 2 befindet sich ein Distanzring 98 zwischen der in der Zeichnung linken Stirnfläche 96 des Lagers 74 und der Verbindungsstelle zwischen beiden Schenkeln 76, 78 und ein weiterer Distanzring 98 zwischen der in der Zeichnung rechts gelegenen Stirnfläche 96 und der Platte 80. Auf diese Weise kann der zweite Schenkel 78 und mit diesem das Getriebe 50 weiter oder näher an die Konsole 52 und somit das Fahrgestell 22 herangebracht werden, was die Möglichkeit einer Spurverstellung und der Verwendung weiterer Reifengrößen eröffnet.

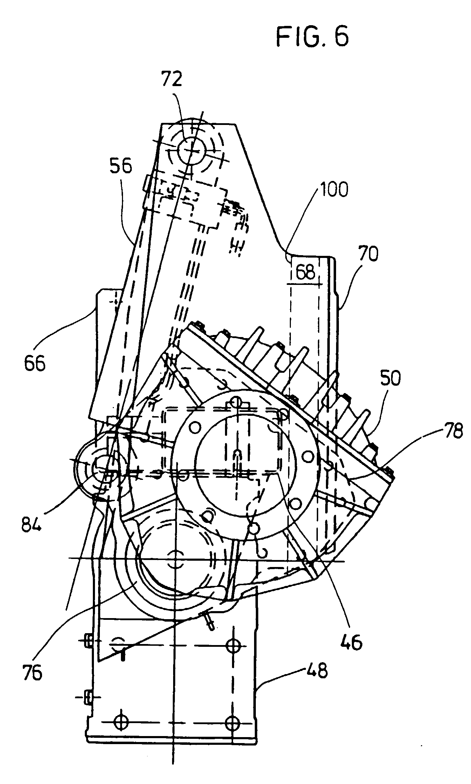

Der zweite Schenkel 78 ist als eine Platte aus hochwertigem Guß oder aus einem Schmiedeteil gebildet, die das als Flansch ausgebildete radträgerseitige Anschlußmittel 58 in einem vorderen Endbereich und eine zylindrische Öffnung 82 in einem anderen, rückwärtigen Endbereich aufweist. Das an der Außenseite angebrachte radträgerseitige Anschlußmittel 58 kann eine Verbindung mit dem als Gegenflansch ausgebildeten Anschlußmittel 60 an dem Getriebe 50 eingehen und weist hierzu ein entsprechendes Lochbild auf, um den Einsatz von Schrauben zu ermöglichen. Mittels der Öffnung 82 kann der zweite Schenkel 78 den ersten Schenkel 76 nahezu ohne Spiel übergreifen, so daß beide Schenkel 76, 78 miteinander verschraubt oder verschweißt werden können. Schließlich erstreckt sich von der Innenseite des zweiten Schenkels 78 parallelachsig zu dem ersten Schenkel 76 ein Anschlag 84, der endseitig als Zapfen ausgebildet ist und an einer in Figur 6 erkennbaren Unterkante der äußeren Wand 68 zur Anlage kommen kann.

Sowohl der als Zapfen ausgebildete Anschlag 84 wie auch der Bolzen 72 können in einer erweiterten Ausführungsform als Sensorglieder mit Lastmeßvorrichtungen ausgebildet oder mit solchen versehen sein, die die Ermittlung von Lastzuständen oder des Gewichts des Inhalts des Korntanks 18 ermöglichen, wozu allerdings eine Auswertungseinrichtung erforderlich ist.

Es zeigt sich somit, daß der Schwenkarm 54 mit dem Getriebe 50 um die Drehachse des Lagers 74, die in diesem Ausführungsbeispiel mit der der Abtriebswelle 62 koaxial ist, in dem Lager 74 schwenken kann, ohne daß die Koaxialität der Abtriebswelle 62 und der Eingangswelle 64 verloren geht.

Die Stellvorrichtung 56 ist in diesem Ausführungsbeispiel als ein linear wirkender, doppelseitig beaufschlagbarer Hydraulikmotor ausgebildet, der einen Kolben 86 und einen Zylinder 88 umfaßt und von einer nicht gezeigten Steuer- oder Regelvorrichtung beaufschlagt wird.

Während das zylinderseitige Ende der Stellvorrichtung 56 auf dem Bolzen 72 schwenkbar gelagert ist, greift dessen kolbenstangenseitiges Ende an dem Anschlag 84 auf dessen als Zapfen ausgebildeten Endbereich schwenkbar an. In einer eingefahrenen Stellung liegt der Anschlag 84 an der Unterkante der äußeren Wand 68 an, und die Stellvorrichtung 56 ragt teilweise nach unten aus der Konsole 52 heraus. In einer ausgefahrenen Stellung der Stellvorrichtung 56 bewegt sich sowohl die Stellvorrichtung 56 als auch das Getriebe 50 nach unten aus der Konsole 52 heraus bzw. über diese hinaus. Infolge einer Aktivierung der Stellvorrichtung 56 wird demnach das Getriebe 50 mit dem Schwenkarm 54 in dem Lager 74 gedreht. Es ist mit Blick auf Figur 6 ersichtlich, daß das Getriebe 50 entgegen dem Uhrzeigerdrehsinn um die Längsmittenachse des Lagers 74 schwenkt, sobald die Stellvorrichtung 56 ausgefahren wird. Diese Schwenkbewegung bewirkt, daß sich der Abstand zwischen dem Rahmen 46 und der Aufstandsfläche des Rades 12 verändert und das Fahrgestell 22, also die gesamte Erntemaschine 10 zumindest auf einer Seite angehoben wird.

Die Stellvorrichtung 56 wird auf nicht gezeigte Weise von einem Hydraulikschaltkreis betätigt, in dem eine Druckquelle und wenigstens ein Mehrwege-Stellungsventil vorgesehen sind. Das Mehrwege-Stellungsventil wird vorzugsweise von Elektromagneten geschaltet, die ihre Steuersignale von einem Regelkreis erhalten. Der Regelkreis enthält eine bekannte Pendelbox oder Quecksilberwaage, die eine seitliche Neigung der Erntemaschine 10 erfaßt und daraus ein Ausgangssignal bildet, das zum Ziel hat, durch Ein- oder Ausfahren der Stellvorrichtung 56 die Erntemaschine 10 in der Waagrechten zu halten.

In die Konsole 52 ist ein Leitungsführungsrohr 100 eingeschweißt, durch das zu der Stellvorrichtung 56 führende, nicht näher gezeichnete Hydraulikschläuche geführt sind, so daß sie keiner mechanischen Beanspruchung ausgesetzt und deshalb geschützt sind. Das Leitungsführungsrohr 100 ist in den Figuren 2 bis 5 nicht eingezeichnet, um eine Unübersichtlichkeit zu vermeiden.

Der Regelkreis kann auch von einem manuell betätigbaren Schalter aus gesteuert und überbrückt werden, der einen Betriebs- und einen Außerbetriebszustand einleiten kann. In dem Betriebszustand wird zwischen einem Ruhe- und einem VollBetriebszustand unterschieden. In dem Ruhe-Betriebszustand werden die beiden Stellvorrichtungen 56 je zur Hälfte ausgefahren, so daß die Erntemaschine 10 in ihrem vorderen Bereich angehoben wird und gegenüber dem Boden die richtige Stellung einnimmt. In dieser Stellung verharren die Stellvorrichtungen 56. In dem Vollbetriebszustand können die beiden Stellvorrichtungen 56 wechselweise voll ein- oder voll ausgefahren werden, um die Erntemaschine 10 auf der linken oder der rechten Seite anzuheben bzw. abzusenken.

Es ist darüber hinaus möglich, in dem Außerbetriebszustand eine weitere Schaltung einzurichten, nach der auf eine manuelle Betätigung hin beide Stellvorrichtungen 56 voll ausgefahren werden, was bei der Verladung der Erntemaschine 10 auf einem Tieflader, zu Wartungszwecken oder bei der Aufnahme oder dem Absetzen bestimmter Vorsätze dienlich sein kann.

Die Schwenkvorrichtung 44 ist in diesem Ausführungsbeispiel dahingehend weiterentwickelt, daß mittels des Verstellwegs des Schwenkarms 54 bzw. des Getriebes 50 auch ein Signal für die Verstellung einer weiteren Komponente gewonnen werden kann, die ebenfalls in eine von der Hangneigung abhängige Stellung gebracht werden soll. Bei Mähdreschern muß z. B. das Schneidwerk, das infolge einer Verschwenkung des Fahrgestells 22 in die Waagerechte ebenfalls mitschwenkt, in eine zu dem Boden parallele Lage gebracht bzw. in dieser gehalten werden. Hierzu ist ein Geberglied 90 vorgesehen, das ebenfalls als ein doppelt- und linearwirkender Hydraulikmotor ausgebildet ist. Dieses Geberglied 90 ist einenends (zylinderseitig) über Laschen 92 an dem Rahmen 46 und anderenends (kolbenstangenseitig) exzentrisch an der Platte 80 jeweils schwenkbar angeschlossen. In der Zeichnung nicht gezeigte Leitungen verbinden die jeweiligen Druckkammern dieses Geberglieds 90 mit denen eines Nehmerglieds, das an der anderen schwenkbar angebrachten Komponente, z. B. dem Schneidwerk, angreift. Es ist ersichtlich, daß infolge eines Schwenkvorgangs des Schwenkarms 54 über den ersten Schenkel 76 und die Platte 80 das Geberglied 90 in seiner Länge verändert wird, so daß aus diesem Druckflüssigkeit heraus und durch die Leitung zu dem Nehmerglied gedrückt wird.

Der Anlenkpunkt des Geberglieds 90 an der Platte 80 und die Lage der Stellvorrichtung 56 gegenüber dem Anschlag 84 und dem Bolzen 72 sind veränderlich zu gestalten, wenn die Distanzringe 98 verwendet werden und die axiale Lage des ersten Schenkels 76 in der Hülse 74 verändert wird.

In den Hydraulikkreis des Geberglieds 90 und des Nehmerglieds kann auch eine Schneidwerkshöhenführung mit Querausgleich integriert werden, die einen solchen Vorsatz der Erntemaschine 10 zu der Hangsteuerung auch noch stets parallel zu dem Boden führt, um die Abweichung von der Parallelen aufgrund eines eingesunkenen Rades, einer Furche oder einer Reifendeformation beim Fahren am Hang auszugleichen. Diese Schneidwerkshöhenführung könnte ebenso direkt auf die Stellvorrichtungen 56 wirken.

Ein solches Nehmerglied kann auch auf andere hangneigungsabhängig gesteuerte Komponenten, wie Leitbleche auf den Sieben oder dem Vorbereitungsboden oder die Stellung des Siebkastens wirken.

Ist von vornherein beabsichtigt, die Erntemaschine 10 nur hangtauglich auszubilden, wird die Schwenkvorrichtung 44 über die Konsole 52, wie bisher beschrieben, direkt an den Rahmen 46 angeschweißt, so daß sich eine Achse aus einem einheitlichen Schweißzusammenbau ergibt, der mit den fahrgestellseitigen Anschlußmitteln 94 an die entsprechenden Anschlußmittel an dem Fahrgestell 22 angebracht werden kann.

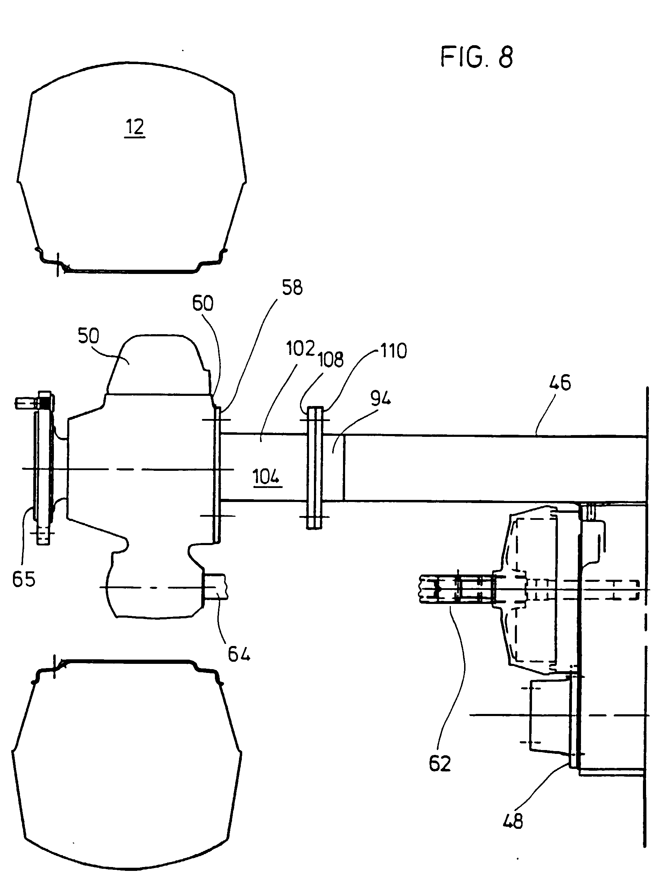

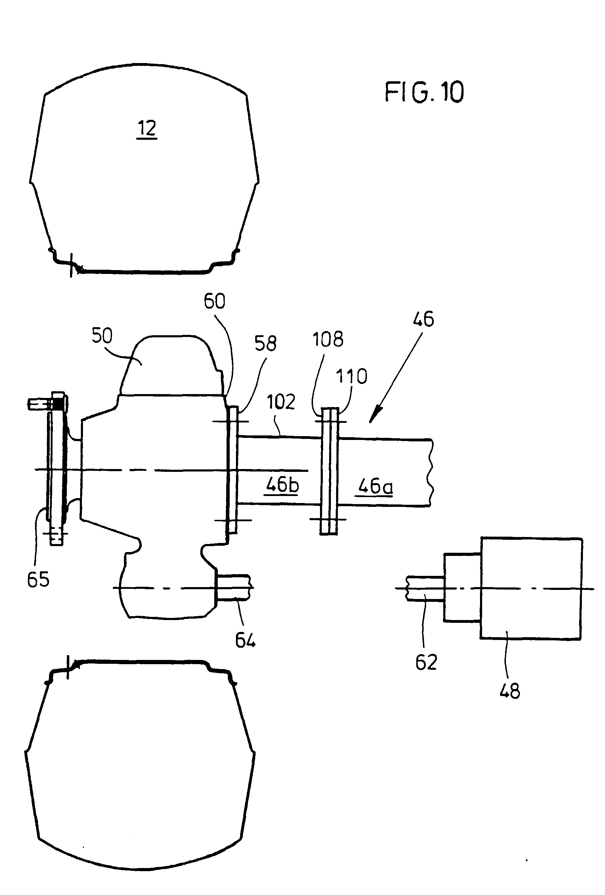

Allerdings kann die Erntemaschine 10 auch als eine hauptsächlich auf der Ebene zu betreibende Maschine gebaut werden, bei der das Getriebe 50 direkt mit seinem als Flansch ausgebildeten Anschlußmittel 60 an den Rahmen 46 starr angebracht wird. In diesem Fall wird ein Rahmen 46 gebildet, bei dem alle mit der Schwenkvorrichtung 44 in Verbindung stehenden Teile fehlen. Ein derartiger vorzugsweise als Achse ausgebildeter Rahmen 46 ist in den Figuren 7 bis 10 gezeigt und weist einen Rahmen 46 auf, der insgesamt um die Breite der Schwenkvorrichtung 44 länger ist als der Rahmen 46 mit Schwenkvorrichtung 44, wobei gemäß den Figuren 8 und 10 der Rahmen 46 zweiteilig ausgebildet ist, und die der Schwenkvorrichtung 44 entsprechende Länge von einem Zwischenstück 102 überbrückt wird.

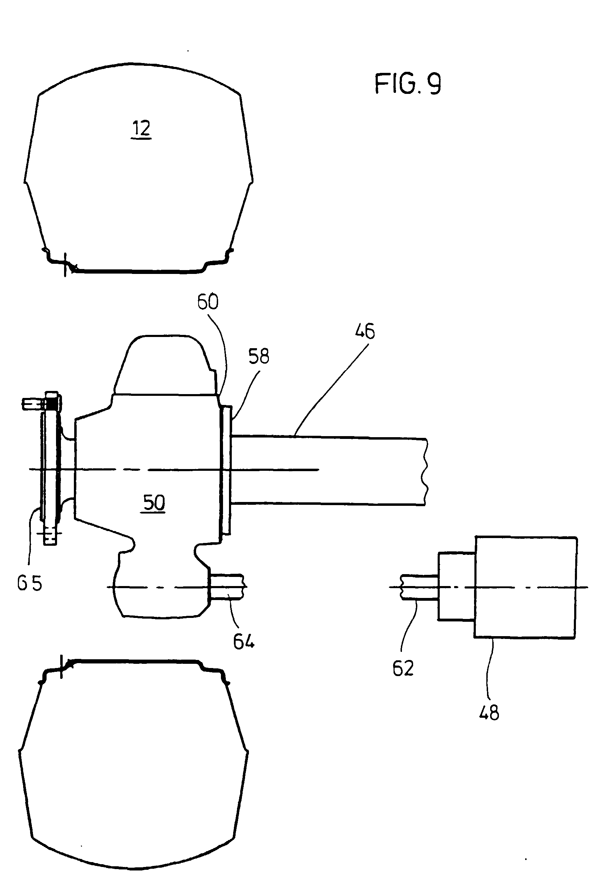

Dementsprechend ist in den Figuren 8 und 10 ein Rahmen 46 gezeigt, der dem nach den Figuren 7 und 9 im wesentlichen entspricht, der aber über ein Zwischenstück 102 an dem Radträger 50 angreift. Dieses Zwischenstück 102 entspricht dem Abstand zwischen dem Ende des Rahmens 46 und dem Anschlußmittel 60 an dem Getriebe 50, wenn die Schwenkvorrichtung 44 verwendet wird. Das Zwischenstück 102 setzt sich aus einem Rohrteil 104, dem als Platte ausgebildeten radträgerseitigen Anschlußmittel 58 und einer ebenfalls ein Anschlußmittel darstellenden Platte 108 zusammen, wobei das radträgerseitige Anschlußmittel 58 an das Anschlußmittel 60 des Getriebes 50 und die Platte 108 an einen wiederum als Anschlußmittel ausgebildeten Flansch 110 an der außenliegenden Stirnfläche des Rahmens 46 angeschraubt wird. Auf diese Weise wird für den als Achse ausgebildeten Rahmen 46 für den Einsatz in der Ebene und für den zum Einsatz am Hang der gleiche Rahmen 46 verwendet, wobei der Abstand wahlweise mittels der Schwenkvorrichtung 44 oder dem Zwischenstück 102 überbrückt wird. Die Konsole 52 und das Zwischenstück 102 können an den Rahmen 46 jeweils angeschraubt, angenietet oder angeschweißt werden.

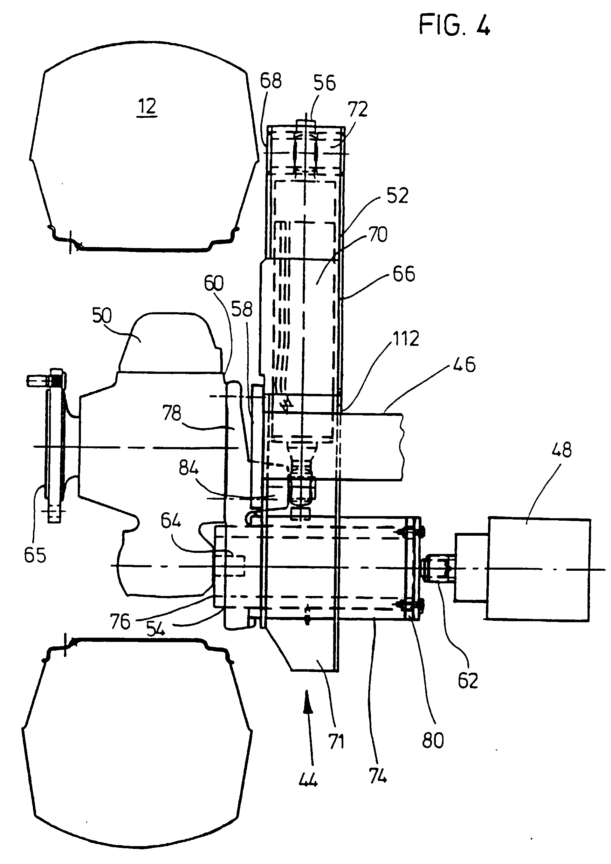

Der in den Figuren 4, 5, 9 und 10 gezeigte Rahmen 46 stellt gegenüber den eingangs beschriebenen Rahmen 46 eine alternative Form des mittelbaren Anschlusses des Getriebes 50 an das Fahrgestell 22 dar. Das Getriebe 50 könnte ebenso direkt an das Fahrgestell 22 angeschlossen werden, wenn an diesem entsprechende Anschlußmittel vorgesehen sind.

In diesem Fall ist der Rahmen 46 als ein Achsstück ausgebildet; er kann aber auch als eine einfache Strebe, ein Winkeleisen, eine Plattform oder dergleichen Verbindungselement ausgebildet sein. Es kann je Rad 12 ein eigener Rahmen 46 vorgesehen werden; es können aber auch mehrere Rahmen 46 zu einem gemeinsamen Rahmen, Fahrgestell, Achse oder dergleichen zusammengefaßt sein.

Bei dem alternativen Ausführungsbeispiel nach den Figuren 4, 5, 9 und 10 ist die Antriebsquelle 48 nicht an das Fahrgestell 22 angeflanscht, sondern es ist angedeutet, daß sich die Antriebsquelle 48 an beliebiger Stelle der Erntemaschine 10 befindet und in vielfältiger Weise, insbesondere als ein mechanisches oder hydrostatisches Getriebe, das eine Abtriebswelle 62 aufweist, die mit der Eingangswelle 64 in drehfester Verbindung steht, ausgebildet werden kann. Die Antriebsquelle 48 kann aber auch so angeordnet sein, daß die Abtriebs- und die Eingangswelle 62 und 64 nicht - wie dargestellt - koaxial zueinander, sondern zueinander versetzt verlaufen; in diesem Fall würde man eine Gelenkwelle zur Antriebsübertragung verwenden. Schließlich könnte die Antriebsquelle 48 aber auch direkt an das Getriebe 50 und auf die Eingangswelle 64 geflanscht sein und die Antriebsübertragung mittels einer Muffe oder einer sonstigen Kupplung erfolgen. Jede Art einer Verbindung zwischen der Abtriebs- und der Eingangswelle 62, 64 kann drehfest absolut starr, aber auch mit Torsionsdämpfern versehen hergestellt sein.

In dem in Figur 9 gezeigten Ausführungsbeispiel ist das Getriebe 50 mittels des radträgerseitigen Anschlußmittels 58 und des an ihm vorgesehenen Anschlußmittels/Gegenflansch 60 lösbar angeschlossen. Hierzu dienen in bekannter Weise nicht gezeigte Schrauben.

Gemäß Figur 4 ist die Schwenkvorrichtung 44 so ausgebildet, daß sie an eine Erntemaschine 10 mit einem Rahmen 46 nach Figur 9 angeschlossen werden kann und diese Erntemaschine 10 somit hangtauglich macht.

Auf der dem Betrachter in Figur 4 zugelegenen, oberen Seite der Konsole 52 ist in jede Wand 66, 68 jeweils ein Ausschnitt 112 eingebracht, dessen Querschnitt ausreichend groß ist, um den Rahmen 46 in sich aufnehmen zu können. Es ist aber auch möglich, den Rahmen 46 direkt auf die Oberseite der Konsole 52 aufzusetzen und vorzugsweise lösbar anzuschließen. Der Rahmen 46 ist bei dem Ausführungsbeispiel nach Figur 4 derart mit der Konsole 52 verbunden, daß das radträgerseitige Anschlußmittel 58 an der Außenseite der äußeren Wand 68 anliegt und mit dieser über die vorgenannten Schrauben verbunden ist. Demnach bleibt die Erstreckung des Rahmens 46 in der Richtung der Drehachse des Rades 12 bis hierher die gleiche wie bei einem starr angefügten Radträger 50.

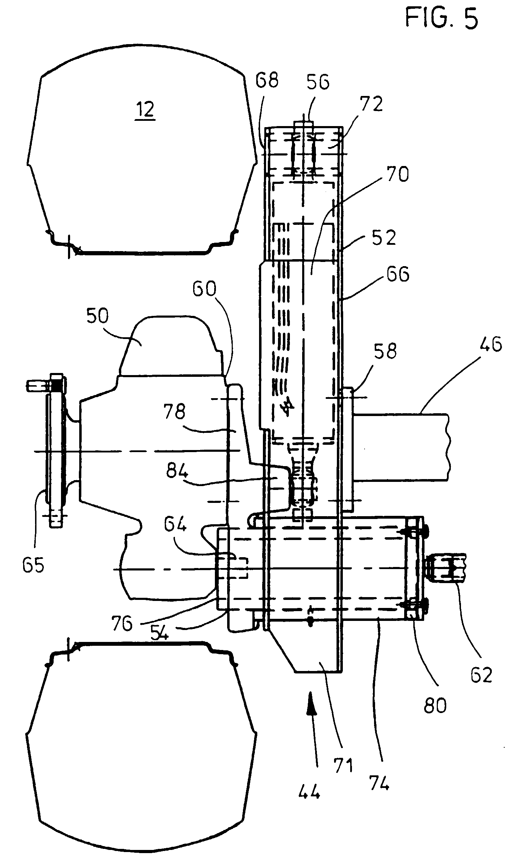

Figur 10 zeigt einen Rahmen 46, der im wesentlichen dem in Figur 9 gezeigten entspricht. Der Unterschied besteht darin, daß gemäß Figur 9 der Rahmen 46 einteilig ausgebildet ist und direkt bis zu dem Getriebe 50 reicht, während er in Figur 10 aus einem ersten und einem zweiten Teil 46a und 46b besteht, wobei der erste Teil 46a mit dem Fahrgestell 22 verbunden ist und radträgerseitig ebenfalls einen Flansch 58 trägt. Der zweite Teil 46b ist als ein Zwischenstück 102 ausgebildet, das beidenends ebenfalls mit einem Anschlußmittel/Flansch 58 versehen ist und mit diesem an das Anschlußmittel/Gegenflansch 60 des Getriebes 50 und an das radträgerseitige Anschlußmittel 58 des ersten Teils 46a anschraubbar ist. Die Länge des Zwischenstücks 102, dessen Querschnitt dem des ersten Teils 46a entsprechen kann, entspricht vorzugsweise wenigstens der Breite der Konsole 52, d. h. deren Erstreckung in der Richtung der Drehachse des Rades 12. Es ist mitunter aber auch vorteilhaft, das Zwischenstück 102 länger auszubilden als die Breite der Konsole 52, was in Verbindung mit Figur 5 näher erläutert wird.

Figur 5 zeigt eine Schwenkvorrichtung 44, die der nach Figur 4 mit Ausnahme der Ausschnitte 112 entspricht - letztere fehlen bei dieser Ausführungsform. Gemäß Figur 5 ist die Konsole 52 der Schwenkvorrichtung 44 mit ihrer inneren Wand 66 an das radträgerseitige Anschlußmittel 58 des ersten Teils 46a des Rahmens 46 anstatt des Zwischenstücks 102 angeschraubt. Im übrigen ist die Anordnung wie in Figur 4 mit den gleichen Ausbildungsmöglichkeiten getroffen.

Wie zuvor erwähnt, kann das Zwischenstück 102 auch länger ausgebildet sein als die Breite der Konsole 52 ausmacht. Insbesondere kann das Zwischenstück 102 inklusive seiner Anschlußmittel/Flansche 58 so lang sein wie der Abstand zwischen der Anschlußfläche des zweiten Schenkels 78 an dem Getriebe 50 und der Anschlußfläche der inneren Wand 66 an dem radträgerseitigen Anschlußmittel 58 des ersten Teils 46a des Rahmens 46, so daß sich bei einem Austausch des Zwischenstücks 102 gegen die Schwenkvorrichtung 44 oder umgekehrt die relative Lage des Rades 12 zu dem Fahrgestell 22 und somit die Baubreite überhaupt nicht ändert.

Nach alledem kann die Umrüstung einer für die Ebene tauglichen Erntemaschine 10 zur Benutzung am Hang durch folgendes Verfahren erfolgen, wobei zunächst davon ausgegangen wird, daß das Rad 12 an dem Fahrgestell 22 mittels des Getriebes 50 direkt angebracht ist.

Die Verfahrensschritte sind folgende:
a) das Getriebe 50 wird von dem Fahrgestell 22 getrennt und
b) zwischen das Getriebe 50 und das Fahrgestell 22 wird die Schwenkvorrichtung 44 eingefügt, in der das Getriebe 50 exzentrisch und vertikal schwenkbar aufgenommen ist.

Ist ein Fahrgestell 22 vorgesehen, an dem das Rad 12 mittels des Getriebes 50 und eines Rahmens 46 angebracht ist, kennzeichnet sich das Verfahren durch folgende Verfahrensschritte:
a) das Getriebe 50 wird von dem Rahmen 46 getrennt,
b) der Rahmen 46 wird erforderlichenfalls um die Breite der Schwenkvorrichtung 44 gekürzt und
c) zwischen das Getriebe 50 und den Rahmen 46 wird die Schwenkvorrichtung 44 eingefügt, in der das Getriebe 50 exzentrisch und vertikal schwenkbar aufgenommen ist.

Das letztgenannte Verfahren ist um so einfacher durchzuführen, wenn die Kürzung des Rahmens 46 durch die Demontage des Zwischenstücks 102 des Rahmens 46 erfolgt.

Die Erntemaschine 10 kann also leicht und sogar nachträglich in eine hangtaugliche Erntemaschine 10 umgebaut werden, indem man die geeignete Kombination aus Rahmen 46, Schwenkvorrichtung 44 und gegebenenfalls Zwischenstück 102 benutzt.

Die Erntemaschine 10 kann also leicht und nachträglich in eine hangtaugliche Erntemaschine 10 umgebaut werden, indem man - sofern vorhanden - das Getriebe 50 von dem Rahmen 46 bzw. dessen Zwischenstück 102 trennt, die Konsole 52 dazwischenfügt, das Getriebe 50 an den Schwenkarm 54 anschraubt und in die Konsole 52 einschiebt, die Stellvorrichtung 56 anschließt und die Antriebsquelle 48 mit der Eingangswelle 64 erforderlichenfalls über eine Wellenverlängerung oder eine Gelenkwelle drehfest verbindet, wobei letzteres entfallen kann, wenn die Antriebsquelle 48 direkt auf die Eingangswelle 64 aufgesetzt ist. Ein Bausatz zum Umrüsten der Erntemaschine 10 enthält zu diesem Zweck die Konsole 52, den Schwenkarm 54, die Stellvorrichtung 56 und erforderlichenfalls eine Wellenverbindung.

## Patentansprüche

1. Erntemaschine (10) mit Seitenhangausgleich mit
a) einer Antriebsquelle (48),
b) einem Getriebe (50), dessen Ausgangswelle mit einem Rad (12) und dessen parallel zu ihr verlaufende Eingangswelle (64) mit der Antriebsquelle (48) verbunden ist,
c) einer Schwenkvorrichtung (44) mit
cc) einem Schwenkarm (54), dessen erster Schenkel (76) in einem Lager (74) koaxial zu der Eingangswelle (64) schwenkbar ist und dessen zweiter Schenkel (78) mit dem Getriebe (50) verbindbar ist, und
dd) einer Konsole (52) mit zwei Wänden (66, 68), die einen Freiraum zwischen sich belassen, einenends einen Bolzen (72) halten und anderenends das Lager (74) tragen, und
d) einer Stellvorrichtung (56), die sich in dem Freiraum zwischen dem Schwenkarm (54) und dem Bolzen (72) erstreckt, wobei sich der Anschluß an dem Schwenkarm (54), insbesondere an dessen zweiten Schenkel (78), unterhalb der Schwenkachse und im wesentlichen seitlich des Bolzens (72) befindet, so daß sich die Stellvorrichtung (56) mehr horizontal als vertikal erstreckt.

2. Erntemaschine nach Anspruch 1, dadurch gekennzeichnet, daß der zweite Schenkel (78) an das Getriebegehäuse (50) anflanschbar ist und einen von diesem trennbaren Teil bildet.

3. Erntemaschine nach einem oder mehreren der vorherigen Ansprüche, dadurch gekennzeichnet, daß der zweite Schenkel (78) plattenförmig ausgebildet ist.

4. Erntemaschine nach einem oder mehreren der vorherigen Ansprüche, dadurch gekennzeichnet, daß sich zwischen dem ersten Schenkel (76) und der Konsole (52) eine Gleitlagerbüchse befindet.

5. Erntemaschine nach einem oder mehreren der vorherigen Ansprüche, dadurch gekennzeichnet, daß die Konsole (52) mit dem Rahmen (46) der Erntemaschine (10) verschweißt ist.

6. Erntemaschine nach einem oder mehreren der vorherigen Ansprüche, dadurch gekennzeichnet, daß der erste Schenkel (76) an seinem dem zweiten Schenkel (78) gegenüberliegenden Ende eine Platte (80) trägt.

7. Erntemaschine nach einem oder mehreren der vorherigen Ansprüche, dadurch gekennzeichnet, daß der Schwenkarm (54) einen Anschlag (84) enthält, auf dem die Stellvorrichtung (56) einenends gelagert ist.

8. Erntemaschine nach einem oder mehreren der vorherigen Ansprüche, dadurch gekennzeichnet, daß der erste Schenkel (76) als Büchse ausgebildet ist, die einen Durchtritt der zu dem Getriebe (50) führenden Eingangswelle (64) zuläßt.

9. Erntemaschine nach einem oder mehreren der vorherigen Ansprüche, dadurch gekennzeichnet, daß für den höhenbeweglichen Anschluß des Rades (12) an dem Rahmen (46) oder Fahrgestell (22) Anschlußmittel (58, 60) vorgesehen sind, die hinsichtlich der Anschlußbedingungen den Anschlußmitteln (58, 60) entsprechen, die dem höhenstarren Anschluß des Rades (12) bzw. des Getriebes (50) an dem Rahmen (46) bzw. Fahrgestell (22) dienen.

10. Erntemaschine nach einem oder mehreren der vorherigen Ansprüche, dadurch gekennzeichnet, daß die Eingangswelle (64) koaxial zu einer Abtriebswelle (62) der Antriebsquelle (48) verläuft.

11. Erntemaschine nach einem oder mehreren der vorherigen Ansprüche, dadurch gekennzeichnet, daß der erste und zweite Schenkel (76, 78) lösbar, z. B. mittels einer Verzahnung oder unlösbar, z. B. mittels einer Schweißverbindung, miteinander verbunden sind.

12. Erntemaschine nach einem oder mehreren der vorherigen Ansprüche, dadurch gekennzeichnet, daß ein Geberglied (90) zur Ermittlung der Stellung des Schwenkarms (54) vorgesehen ist, das einenends an dem ersten Schenkel (76) und anderenends mittelbar oder unmittelbar an dem Rahmen (46) angreift.

13. Erntemaschine nach einem oder mehreren der vorherigen Ansprüche, dadurch gekennzeichnet, daß ein Geberglied (90) an dem Schwenkarm (54), dem Rad (12) oder dem Radträger (50) angreift, das insbesondere als ein doppelt und linear wirkender Hydraulikmotor ausgebildet ist.

14. Erntemaschine nach einem oder mehreren der vorherigen Ansprüche, dadurch gekennzeichnet, daß zwischen den Endflächen des Lagers (74) und dem ersten Schenkel (76) Distanzringe (98) einsetzbar sind.

15. Erntemaschine nach einem oder mehreren der vorherigen Ansprüche, dadurch gekennzeichnet, daß das Fahrgestell (22) oder der Rahmen (46) an der inneren oder der äußeren Wand (66, 68) anschließbar ist und beim Anschluß an die äußere Wand (68) wenigstens eine Wand (66, 68) einen Ausschnitt (112) zur Aufnahme des Rahmens (46) aufweist.

16. Erntemaschine nach einem oder mehreren der vorherigen Ansprüche, dadurch gekennzeichnet, daß die Antriebsquelle (48) als Druckmittelmotor ausgebildet und direkt auf die Eingangswelle (64) aufgesetzt ist.

17. Erntemaschine nach einem oder mehreren der vorherigen Ansprüche, dadurch gekennzeichnet, daß der Bolzen (72) als Sensorglied ausgebildet ist.

18. Erntemaschine nach einem oder mehreren der vorherigen Ansprüche, dadurch gekennzeichnet, daß die Stellvorrichtung (56) zwei in Zylindern (88) geführte Kolben (86) aufweist, die in einem Außerbetriebszustand beide ein- oder ausfahrbar, in einem Ruhe-Betriebszustand beide halb ausfahrbar und in einem Voll-Betriebszustand voll aus- bzw. einfahrbar sind.

19. Erntemaschine (10) mit Seitenhangausgleich mit
a) einer Antriebsquelle (48),
b) einem Getriebe (50), dessen Ausgangswelle mit einem Rad (12) und dessen parallel zu ihr verlaufende Eingangswelle (64) mit der Antriebsquelle (48) verbunden ist,
c) einer Schwenkvorrichtung (44) mit
cc) einem Schwenkarm (54), dessen erster Schenkel (76) in einem Lager (74) koaxial zu der Eingangswelle (64) schwenkbar ist und dessen zweiter Schenkel (78) mit dem Getriebe (50) verbindbar ist, und
dd) einer Konsole (52) mit zwei Wänden (66, 68), die einen Freiraum zwischen sich belassen, einenends einen Bolzen (72) halten und anderenends das Lager (74) tragen, wobei sich die Konsole (52) wenigstens teilweise unterhalb einer Seitenwand eines Fahrgestells (22) der Erntemaschine (10) oder zwischen deren Seitenwänden erstreckt, und
d) einer Stellvorrichtung (56), die sich in dem Freiraum zwischen dem Schwenkarm (54) und dem Bolzen (72) erstreckt.

## Claims

1. A harvesting machine (10) with compensation for hillside working, with
a) a drive source (48),
b) a gearbox (50), whose output shaft is coupled to a wheel (12) and whose input shaft (64) running parallel thereto is coupled to the drive source (48),
c) a swivelling device (44) with
cc) a swinging arm (54), whose first limb (76) can pivot in a bearing (74) coaxial with the input shaft (64) and whose second limb (78) can be connected to the gearbox (50), and
dd) a bracket (52) with two walls (66, 68), which leave a free space therebetween, retain a pin (72) at one end and carry the bearing (74) at the other end, and
d) a positioning device (56) which extends in the free space between the swinging arm (54) and the pin (72), wherein the attachment to the swinging arm (54), in particular to its second limb (78), is located below the pivotal axis and substantially to the side of the pin (72), so that the positioning device (56) extends more horizontally than vertically.

2. A harvesting machine according to claim 1, characterized in that the second limb (78) can be flanged on to the gearbox housing (50) and forms a part separable therefrom.

3. A harvesting machine according to one or more of the preceding claims, characterized in that the second limb (78) is of plate form.

4. A harvesting machine according to one or more of the preceding claims, characterized in that a plain bearing bush is located between the first limb (76) and the bracket (52).

5. A harvesting machine according to one or more of the preceding claims, characterized in that the bracket (52) is welded on to the frame (46) of the harvesting machine (10).

6. A harvesting machine according to one or more of the preceding claims, characterized in that the first limb (76) carries a plate (80) at its end opposite the second limb (78).

7. A harvesting machine according to one or more of the preceding claims, characterized in that the swinging arm (54) has a stop (84) on which the positioning device (56) is mounted at one end.

8. A harvesting machine according to one or more of the preceding claims, characterized in that the first limb (76) is formed as a hollow bush, which allows passage of the input shaft (64) leading to the gearbox (50).

9. A harvesting machine according to one or more of the preceding claims, characterized in that attachment means (58, 60) are provided for connecting the wheel (12) to the frame (46) or chassis (22) with height movement, which correspond in relation to the connection requirements to the attachment means (58, 60) which serve for fixed height attachment of the wheel (12) or the gearbox (50) to the frame (46) or the chassis (22).

10. A harvesting machine according to one or more of the preceding claims, characterized in that the input shaft (64) runs coaxial with a driven shaft (62) of the drive source (48).

11. A harvesting machine according to one or more of the preceding claims, characterized in that the first and second limbs (76. 78) are connected releasably to one another, e.g. by means of splines, or non-releasably, e.g. by means of a welded connection.

12. A harvesting machine according to one or more of the preceding claims, characterized in that a sensor member (90) is provided to detect the position of the swinging arm (54) and engages at one end with the first limb (76) and at the other end directly or indirectly with the frame (46).

13. A harvesting machine according to one or more of the preceding claims, characterized in that a sensor member (90) engages the swinging arm (54), the wheel (12) or the wheel carrier (50) and is in particular formed as a double-acting and linearly acting hydraulic motor.

14. A harvesting machine according to one or more of the preceding claims, characterized in that spacer rings (98) can be fitted between the end surfaces of the bearing (74) and the first limb (76).

15. A harvesting machine according to one or more of the preceding claims, characterized in that the chassis (22) or the frame (46) can be attached to the inner or the outer wall (66, 68) and when attached to the outer wall (68) at least one wall (66, 68) has a cut-out (112) for reception of the frame (46).

16. A harvesting machine according to one or more of the preceding claims, characterized in that the drive source (48) is in the form of a pressure medium motor and is fitted directly on the input shaft (64).

17. A harvesting machine according to one or more of the preceding claims, characterized in that the pin (72) is formed as a sensor member.

18. A harvesting machine according to one or more of the preceding claims, characterized in that the positioning device (56) comprises two pistons (86) moving in cylinders (88), which can both be retracted or extended in a non-operating state, both can be half extended in a rest-operating state and both can be fully extended or retracted respectively in a fully operative state.

19. A harvesting machine (10) with compensation for hillside working, with
a) a drive source (48),
b) a gearbox (50), whose output shaft is coupled to a wheel (12) and whose input shaft (64) running parallel thereto is coupled to the drive source (48),
c) a swivelling device (44) with
cc) a swinging arm (54), whose first limb (76) can pivot in a bearing (74) coaxial with the input shaft (64) and whose second limb (78) can be connected to the gearbox (50), and
dd) a bracket (52) with two walls (66, 68), which leave a free space therebetween, retain a pin (72) at one end and carry the bearing (74) at the other end, wherein the bracket (52) extends at least partially below a sidewall of a chassis (22) of the harvesting machine (10), and
d) a positioning device (56) which extends in the free space between the swinging arm (54) and the pin (72).

## Revendications

1. Moissonneuse (10) comportant un système de compensation d'inclinaison latérale comportant :
a) une source d'entraînement (48),
b) une transmission (50), dont l'arbre de sortie est relié à une roue (12) et dont l'arbre d'entrée (64), qui s'étend parallèlement à l'arbre de sortie, est relié à la source d'entraînement (48),
c) un dispositif de pivotement (44) comportant
cc) un bras pivotant (54), dont la première branche (76) peut pivoter dans un palier (74) coaxialement à l'arbre d'entrée (64) et dont la seconde branche (78) peut être reliée à la transmission (50), et
dd) une console (52) comportant deux parois (66, 68), qui laissent une espace libre entre elle retiennent à une extrémité un boulon (72) et portent, à l'autre extrémité, le palier (74), et
d) un dispositif de réglage (56), qui s'étend dans l'espace libre entre le bras pivotant (54) et le boulon (72), le raccordement sur le bras pivotant (54), notamment au niveau de sa seconde branche (78) étant situé au-dessous de l'axe de pivotement et sensiblement latéralement par rapport au boulon (72), de sorte que le dispositif de réglage (56) s'étend plus horizontalement que verticalement.

2. Moissonneuse selon la revendication 1, caractérisée en ce que la seconde branche (78) est raccordée par bride au carter (50) de la transmission et forme une partie séparable de ce carter.

3. Moissonneuse selon l'une ou plusieurs des revendications précédentes, caractérisée en ce que la seconde branche (78) est agencée en forme de plaque.

4. Moissonneuse selon une ou plusieurs des revendications précédentes, caractérisée en ce qu'un coussinet de palier lisse est situé entre la première branche (76) et la console (52).

5. Moissonneuse selon une ou plusieurs des revendications précédentes, caractérisée en ce la console (51) est soudée au cadre (46) de la moissonneuse (10).

6. Moissonneuse selon une ou plusieurs des revendications précédentes, caractérisée en ce que la première branche (76) porte, au niveau de son extrémité située à l'opposé de la seconde branche (78), une plaque (80).

7. Moissonneuse selon une ou plusieurs des revendications précédentes, caractérisée en ce que le bras pivotant (54) contient une butée (84), sur lequelle une extrémité du dispositif de réglage (56) est tourillonnée.

8. Moissonneuse selon une ou plusieurs des revendications précédentes, caractérisée en ce que la première branche (76) est réalisée sous la forme d'une douille, qui permet le passage de l'arbre d'entrée (64) qui aboutit à la transmission (50).

9. Moissonneuse selon une ou plusieurs des revendications précédentes, caractérisée en ce que pour le raccordement, réglable en hauteur de la roue (12) sur le cadre (46) ou sur le châssis (22), il est prévu des moyens de raccordement (58, 60), qui, en ce qui concerne les conditions de raccordement, correspondent aux moyens de raccordement (58, 60), qui servent à réaliser le raccordement fixe en hauteur de la roue (12) ou de la transmission (50) au cadre (46) ou au châssis (22).

10. Moissonneuse selon une ou plusieurs des revendications précédentes, caractérisée en ce l'arbre d'entrée (64) est coaxial à un arbre mené (62) de la source d'entraînement (48).

11. Moissonneuse selon une ou plusieurs des revendications précédentes, caractérisée en ce que les première et seconde branches (76, 78) sont reliées entre elles de façon amovible, par exemple au moyen d'une denture, ou de façon inamovible, par exemple au moyen d'une liaison soudée.

12. Moissonneuse selon une ou plusieurs des revendications précédentes, caractérisée en ce qu'il est prévu un organe transmetteur (90) servant à détecter la position du bras pivotant (54) et qui attaque par une extrémité la première branche (76) et par l'autre extrémité, directement ou indirectement, le cadre (46).

13. Moissonneuse selon une ou plusieurs des revendications précédentes, caractérisée en ce qu'un organe transmetteur (90) attaque le bras pivotant (54), la roue (12) ou le support de roue (50), qui est agencé notamment sous la forme d'un moteur hydraulique à effet double et linéaire.

14. Moissonneuse selon une ou plusieurs des revendications précédentes, caractérisée en ce que des bagues d'entretoisement (98) peuvent être insérées entre les surfaces d'extrémité du palier (74) et la première branche (76).

15. Moissonneuse selon une ou plusieurs des revendications précédentes, caractérisée en ce que le châssis (22) ou le cadre (46) peut être raccordé à la paroi intérieure ou à la paroi extérieure (66, 68) et que dans le cas du raccordement à la paroi extérieure (68), au moins une paroi (66, 68) possède une découpe (112) servant à loger le cadre (46).

16. Moissonneuse selon une ou plusieurs des revendications précédentes, caractérisée en ce que la source d'entraînement (48) est agencée sous la forme d'un moteur à fluide sous pression et est montée directement sur l'arbre d'entrée (64).

17. Moissonneuse selon une ou plusieurs des revendications précédentes, caractérisée en ce le boulon (72) est agencé sous la forme d'un organe formant capteur.

18. Moissonneuse selon une ou plusieurs des revendications précédentes, caractérisée en ce que le dispositif de réglage (56) comporte deux boulons (86), qui sont guidés dans des cylindres (88) et qui peuvent tous deux rétractés ou déployés, dans un état hors service, peuvent être tous deux à demi-déployés dans un état de fonctionnement au repos et peuvent être complètement déployés ou rétractés dans un état de fonctionnement complet.

19. Moissonneuse (10) comportant un système de compensation d'inclinaison latérale, comportant :
a) une source d'entraînement (48),
b) une transmission (50) dont l'arbre de sortie est relié à une roue (12) et dont l'arbre d'entrée (64), qui s'étend parallèlement à l'arbre de sortie, est relié à la source d'entraînement (48),
c) un dispositif de pivotement (44) comportant
cc) un bras pivotant (54), dont la première branche (76) peut pivoter dans un palier (74) coaxialement à l'arbre d'entrée (64) et dont la seconde branche (78) peut être reliée à la transmission (50), et
dd) un console (52) comportant deux parois (66, 68), qui laissent une espace libre entre elle retiennent à une extrémité un boulon (72) et portent, à l'autre extrémité, le palier (74), la console (52) s'étendant au moins en partie au-dessous d'une paroi latérale d'un châssis (22) de la moissonneuse (10) ou entre les parois latérales de la moissonneuse, et
d) un dispositif de réglage (56), qui s'étend dans l'espace libre présent entre le bras pivotant (54) et le boulon (72).
